(19) Europäisches Patentamt
European Patent Office
Office européen des brevets

(11) **EP 4 657 978 A2**

(12) **EUROPEAN PATENT APPLICATION**

(43) Date of publication:
**03.12.2025 Bulletin 2025/49**

(21) Application number: **25208888.5**

(22) Date of filing: **20.12.2022**

(51) International Patent Classification (IPC):
*H05B 1/02* *(2006.01)*

(52) Cooperative Patent Classification (CPC):
**A45D 1/28; A45D 1/00; A45D 1/04; A45D 2/001;
A45D 6/20; G05D 23/1904; H05B 1/0252**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.12.2021 GB 202118806**

(62) Document number(s) of the earlier application(s) in
accordance with Art. 76 EPC:
**22838937.5 / 4 451 999**

(71) Applicant: **Jemella Limited
London W1D 3SP (GB)**

(72) Inventors:
• **GOLD, Richard
London, W1D 3SP (GB)**

• **WRIGHT, Liam
London, W1D 3SP (GB)**
• **NOGAROTTO, Luca
London, W1D 3SP (GB)**

(74) Representative: **Mathys & Squire
The Shard
32 London Bridge Street
London SE1 9SG (GB)**

Remarks:
This application was filed on 15-10-2025 as a
divisional application to the application mentioned
under INID code 62.

(54) **THERMAL CONTROL APPARATUS AND METHOD**

(57)     The present invention provides a heating apparatus and method for heating a load. The heating apparatus comprises a heater having a heating element (15) for receiving electrical power and for converting the electrical power into heat to heat a heating surface (6) of the heater, a temperature sensor (19) for sensing and outputting measurements of a temperature ($T_C$) of the heating element (15), a power actuator (22) for providing the electrical power to the heating element of the heater, and control circuitry (24) for controlling the power actuator (22) to control the power delivered by the power actuator to the heating element. The control circuitry (24) is configured to: receive the temperature measurements ($T_C$) from the temperature sensor (19), control the power delivered to the heating element by the power actuator (22) in dependence upon the temperature measurements ($T_C$) and at least one control parameter, to maintain the heating surface of the heater at a desired operating temperature ($T_d$). The control circuitry (24) includes an idle mode of operation in which at least one control parameter is set to a first value and a boost mode of operation in which the at least one control parameter is set to a second value that is higher than the first value, wherein the control circuitry (24) is configured to exit the idle mode of operation and enter the boost mode of operation in the case that the control circuitry (24) detects initiation of a load induced cooling effect of the heater, and wherein the control circuitry (24) is configured to exit the boost mode of operation and enter the idle mode of operation when the control circuitry (24) detects a termination of the load induced cooling effect of the heater. This arrangement enables the heater to adapt quickly to loading and unloading.

**EP 4 657 978 A2**

**Figure 10**

## Description

### Field of the Invention

The present invention relates to an apparatus and method for controlling temperature in heating devices. The invention has particular although not exclusive relevance to an apparatus and method for controlling temperature in devices for manipulating the shape of hair, for example in order to style the hair and/or for drying hair.

### Background to the Invention

There exist a variety of apparatus for styling hair, which use heat to effect a change in the shape of the hair. The hair styling apparatus heat the hair to above its glass transition temperature, where the hair becomes mouldable. The hair is styled at a temperature above the glass transition temperature; once it has cooled, it remains styled until it next becomes wet.

One example of such a hair styler is a hair straightener, which usually comprises a pair of arms hinged at one end and each arm comprising one or more heaters. Each heater comprises a heating element and one or more heating plates. If the heating plates have a smooth surface, the hair can be sandwiched and clamped between the plates and heated from both sides. The flat surfaces of the plates style the hair in a 'straight' configuration while at the elevated temperature. If the surface of the heating plate is corrugated then the styler can crimp the user's hair. Another example of a device that can be used to style hair is a hair curler (also known as a curling tong) which typically has a curved heating surface.

Hair has a relatively high thermal mass and when in contact with the heating surface of a hair styler the hair absorbs a significant amount of the heat energy. The heating elements must quickly supply the lost heat energy back to the heating surface otherwise the temperature of the heating surface will drop and potentially impact on the quality of the thermal styling. If the temperature falls below the glass transition temperature, the hair will not retain the styled shape. However, if the hair is heated to a temperature that is too high, the hair can undergo significant damage. As such, the styler must be able to control the temperature so that the heating surface remains within a particular temperature range. Furthermore, it must maintain the temperature range both when hair is frequently and quickly loaded and unloaded onto the heating surface, and when hair is held on the heating surface for a prolonged period of time.

Accordingly, the present invention seeks to provide an improved method of controlling the heating method of the heating surface of the heating device.

### Summary of the Invention

According to a first aspect of the invention, there is provided a heating apparatus for heating a load, the heating apparatus comprising: a heater having a heating element for receiving electrical power and for converting the electrical power into heat to heat a heating surface of the heater; a temperature sensor for sensing and outputting measurements of a temperature of the heater; a power actuator for providing the electrical power to the heating element of the heater; and control circuitry for controlling the power actuator to control the power delivered by the power actuator to the heating element, wherein the control circuitry is configured to: receive temperature measurements from the temperature sensor; control the power delivered to the heating element by the power actuator in dependence upon the temperature measurements and at least one control parameter, to maintain the heater at a desired operating temperature; wherein the control circuitry includes an idle mode of operation in which the at least one control parameter is set to a first value and a boost mode of operation in which the at least one control parameter is set to a second value that is higher than the first temperature value; wherein the control circuitry is configured to exit the idle mode of operation and enter the boost mode of operation in the case that the control circuitry detects initiation of a load induced cooling effect of the heater; and wherein the control circuitry is configured to exit the boost mode of operation and enter the idle mode of operation when the control circuitry detects a termination of the load induced cooling effect of the heater.

The present invention can respond quickly to loading and unloading of the heating apparatus, enabling the system to maintain high temperature upon initiation of a load induced cooling effect but preventing overheating upon termination of the load induced cooling effect.

The at least one control parameter may comprise one or more of: the desired operating temperature of the heater and at least one PID gain coefficient. Both parameters can be altered to change the response by the control circuitry to a difference (or error) between the temperature measurements and a desired operating temperature.

The heating apparatus may preferably further comprise a power sensor for sensing and outputting measurements of the electrical power provided to the heating element by the power actuator; wherein the control circuitry is further configured to receive the power measurements from the power sensor. This can provide information regarding the power required to heat the heating element to a desired temperature, which can provide an indication of heat loss.

The control circuitry may be configured to exit the idle mode of operation and enter the boost mode of operation in the case that the control circuitry detects a change of the power measurements that are indicative of the initiation of said load induced cooling effect of the heater. This can enable the system to respond quickly to a load induced cooling effect.

The control circuitry may preferably be configured to exit the boost mode of operation and enter the idle mode of operation when the control circuitry detects a change of the power measurements that are indicative of the termination of the load induced cooling effect of the heater. This can enable to system to avoid overheating the heater.

The load induced cooling effect of the heater may be detected by an increase in the power measurements from the power sensor. An increase in power measurements typically indicates that additional power is required to maintain a desired temperature of the heater. This can mean that the rate of heat loss from the heater has increased, indicating the initiation of a load induced cooling effect.

Preferably the control circuitry is configured to exit the idle mode of operation and enter the boost mode of operation in the case that the control circuitry detects the power measurement is greater than a first threshold power. The first threshold can define a power which is likely to indicate the initiation of a load induced cooling effect. The threshold power is preferably sufficiently higher than the typical power. This can prevent normal power fluctuations causing the control circuitry to exit the idle mode of operation and enter the boost mode of operation.

The control circuitry is preferably configured to exit the boost mode of operation and enter the idle mode of operation in the case that the control circuitry detects the power measurement is lower than a second threshold power. The second threshold power can define a power which is likely to indicate the termination of a load induced cooling effect.

Preferably the first threshold power is lower than the second threshold power. The use of two separate thresholds to indicate initiation and termination of the load induced cooling effect can enable the system to respond quickly and efficiently to both situations, which can help to maintain the temperature of the heater (upon initiation) and to prevent the over-heating of the heater (upon termination).

The control circuitry may be configured to exit the idle mode of operation and enter the boost mode of operation in the case that the control circuitry detects a change of the temperature measurements that is indicative of the initiation of said load induced cooling effect of the heater. If the temperature of the heater is measured to decrease, this can indicate the initiation of a load induced cooling effect. Temperature measurements may be used in conjunction with or instead of power measurements to detect the initiation of a load induced cooling effect.

Preferably the control circuitry is configured to exit the boost mode of operation and enter the idle mode of operation in the case that the control circuitry detects a change of the temperature measurements that is indicative of the termination of the load induced cooling effect of the heater. This can be separate to or complementary to the use of power measurements to detect the load induced cooling effect. This may override the use of power measurements. Upon termination of the load induced cooling effect, the temperature of the plates can increase if the system remains in the boost mode. This can be undesirable as it can cause the heater to over-heat, potentially leading to damage to the heater and/or the object to be heated (such as hair). In order to prevent this from occurring, it is preferable to exit the boost mode of operation.

In preferable implementations of the invention, the control circuitry is configured to detect the initiation or termination of said load induced cooling effect of the heater dependent on whether the temperature measurements are within a defined range. If the temperature measurements are outside of the defined range, the system may automatically exit the mode of operation. This may override the use of power measurement to detect the initiation or termination of said load induced cooling effect of the heater.

The control circuitry is preferably configured to exit the boost mode of operation and enter the idle mode of operation in the case that the control circuitry detects a temperature greater than a maximum threshold temperature wherein the maximum threshold temperature is greater than an operating temperature of the boost mode of operation. This can prevent the heater from over-heating. The control circuity is preferably configured to exit the boost mode and enter the idle mode if the maximum threshold temperature is measured regardless of power measurements,

Preferably, the control circuitry is configured to remain in the boost mode of operation in the case that control circuitry detects a temperature below a first threshold temperature. This is preferably the case regardless of power measurements.

Preferably the control circuitry is configured to monitor for or detect termination of said load induced cooling effect of the heater in the case that the temperature measurement is between a first threshold temperature and a maximum threshold temperature. Only if the temperature of the heater is within this range does the control circuity move to the step of detecting termination of the load induced cooling effect, by considering the power measurements or the temperature measurements. In this range, the temperature of the heater is neither excessively high nor excessively low.

The first threshold temperature may be lower than an operating temperature of the idle mode of operation ($T_{idle}$). As such, the temperature falling below this temperature indicates a significant fall in temperature, such that the system should preferably automatically enter the boost mode.

Preferably, the control circuitry is configured to remain in the idle mode of operation in the case that the control circuitry detects a temperature greater than a second threshold temperature. This preferably overrides power measurements. If the temperature of the heater is above the second threshold temperature, the system does not move to the step of detecting termination of the load induced cooling effect, by considering the power measurements or the temperature measurements.

The control circuitry is preferably configured to monitor for or detect initiation of said load induced cooling effect of the heater in the case that the temperature measurement is below a second threshold temperature.

Preferably the second threshold temperature is lower than an operating temperature of the idle mode of operation, preferably 3 to 6 degrees lower. This provides a threshold cooling before which the system is configured to monitor for or detect initiation of said load induced cooling effect of the heater. This can prevent the system being oversensitive and moving between operating modes as a result of small temperature fluctuations.

In a preferable implementation, the control circuitry is configured to exit the idle mode of operation and enter the boost mode of operation in the case that the control circuitry detects a rate of change of temperature of the heater that is indicative of the initiation of the load induced cooling effect of the heater. An increased rate of change of temperature can indicate a load which is causing the heater to cool at a greater rate.

Preferably, the control circuitry is configured to exit the idle mode of operation and enter the boost mode of operation if the determined rate of change of temperature is greater than a threshold cooling rate. The threshold cooling rate may be approximately equal to or greater than the rate of cooling caused by convection.

The control circuitry may be configured to exit the boost mode and enter the idle mode in the case that the control circuitry detects a rate of change of temperature of the heater that is below a threshold cooling rate, otherwise the control circuitry is configured to remain in the boost mode. The decrease in the rate of change of temperature can indicate a termination of the load induced cooling effect.

Preferably the at least one control parameter comprises a desired operating temperature ($T_d$) of the heater and the first value and the second value are both above the glass transition temperature of hair. If the heater is implemented in a hair styling device, this can enable the hair to be styled.

The desired operating temperature of the heater may be the desired operating temperature of the heating surface of the heater, the heating surface of the heater preferably being configured to contact hair.

In a preferable implementation, the temperature sensor is configured to sense the temperature of the heating element and wherein the control circuitry is configured to use the power measurement to determine a temperature difference between the heating element and the heating surface of the heater. The temperature of the heating surface cannot be easily measured directly, so this allows the temperature of the heating surface to be calculated.

Preferably, the control circuitry is further configured to determine the rate of change of temperature of the heating surface. The derivative of the temperature measurements over time can be used to determine the rate of change of temperature. This can provide an indication of a cooling effect.

In a preferable implementation, the heating apparatus comprises a hair styler or hair dryer.

The hair styler may comprise first and second mutually-opposing arms adapted for movement between an open configuration for receiving a length of hair therebetween and a closed configuration in which hair is sandwiched between the opposing arms, and wherein at least one of the arms includes the heater.

According to a further aspect of the invention, there is provided a method of controlling a heater, the heater having a heating element for receiving electrical power and for converting the electrical power into heat to heat a heating surface of the heater; a temperature sensor for sensing and outputting measurements of a temperature of the heater; and a power actuator for providing the electrical power to the heating element of the heater; said method comprising: receiving temperature measurements from the temperature sensor; controlling the power delivered to the heating element by the power actuator in dependence upon the temperature measurements and at least one control parameter, to maintain the heater at a desired operating temperature; setting at least one control parameter to a first value in an idle mode of operation, or to a second value in a boost mode of operation, wherein the second value is higher than the first value; switching from said idle mode of operation to said boost mode of operation upon detecting initiation of a load induced cooling effect of the heater; and switching from said boost mode of operation to said idle mode of operation upon detecting termination of a load induced cooling effect of the heater.

The at least one control parameter may comprise one or more of: the desired operating temperature ($T_d$) of the heater and at least one PID gain coefficient.

This method can respond quickly to loading and unloading of the heating apparatus, enabling the system to maintain high temperature upon initiation of a load induced cooling effect but preventing overheating upon termination of the load induced cooling effect.

The heater may preferably further comprise a power sensor for sensing and outputting measurements of the electrical power provided to the heating element by the power actuator, the method further comprising receiving the power measurements from the power sensor.

Preferably, the method further comprises switching from said idle mode of operation to said boost mode of operation upon detecting a change in the power measurements indicative of initiation of a load induced cooling of the heater.

The method may further comprise switching from said boost mode of operation to said idle mode of operation upon detecting a change in the power measurements indicative of termination of a load induced cooling effect of the heater.

Said load induced cooling effect of the heater may be detected by an increase in the power measurement.

Preferably, the switching from said idle mode of operation to said boost mode of operation occurs upon detecting the power measurement is greater than a first threshold power.

The switching from said idle mode of operation to said boost mode of operation may occur upon detecting the power measurement (P) is lower than a second threshold power.

The first threshold power is preferably lower than the second threshold power.

In a preferable implementation, detecting initiation of a load induced cooling effect of the heater comprises detecting a change in the temperature measurements that are indicative of said load induced cooling effect of the heater.

Further preferably, detecting termination of a load induced cooling effect of the heating surface of the heater comprises detecting a change in the temperature measurements that are indicative of termination of said load induced cooling effect of the heater.

The method may be such that detecting initiation or termination of said load induced cooling effect of the heater is dependent on whether the temperature measurement is within a defined range.

Preferably the method further comprises switching from said boost mode of operation to said idle mode of operation upon detecting a temperature measurement greater than a maximum threshold temperature, wherein the maximum threshold temperature is greater than an operating temperature of the boost mode of operation.

The method may further comprise remaining in said boost mode of operation upon detecting a temperature measurement below a first threshold temperature.

Preferably the method further comprises detecting termination of said load induced cooling effect of the heater upon detecting a temperature measurement between a first threshold temperature and a maximum threshold temperature.

In a preferable implementation, the first threshold temperature is lower than an operating temperature of the idle mode of operation.

The method may further comprise remaining in said idle mode of operation upon detecting a temperature measurement greater than a second threshold temperature.

Preferably, the method further comprises detecting the initiation of said load induced cooling effect of the heater upon detecting a temperature measurement below a second threshold temperature.

The second threshold temperature may be lower than an operating temperature of the idle mode of operation, preferably 1 to 6 degrees Celsius lower.

The method preferably further comprises exiting the idle mode of operation and entering the boost mode of operation upon detecting a rate of change of temperature of the heater that is indicative of the initiation of the load induced cooling effect of the heater.

Preferably, detecting a rate of change of temperature of the heater that is indicative of the initiation of the load induced cooling effect of the heater comprises detecting a rate of change of temperature greater than a threshold cooling rate.

The method may further comprise exiting the boost mode and entering the idle mode upon detecting a rate of change of temperature of the heater that is below a threshold cooling rate, otherwise remaining in the boost mode.

Preferably, the at least one control parameter comprises a desired operating temperature (Td) of the heater and the first value and the second value are both above the glass transition temperature of hair.

In preferable implementations of the invention, the desired operating temperature of the heater is the desired operating temperature of the heating surface of the heater, the heating surface of the heater preferably being configured to contact hair.

Preferably the temperature measurements are measurements of the temperature of the heating element, and the method further comprises using the power measurement to determine a temperature difference between the heating element and the heating surface of the heater.

The method may further comprise determining the rate of change of temperature of the heating surface.

According to a further aspect of the invention, there is provided a hair styler comprising: a heater having a heating element for receiving electrical power and for converting the electrical power into heat to heat a heating surface of the heater; a temperature sensor for sensing and outputting measurements of a temperature of the heater; a power actuator for providing the electrical power to the heating element of the heater; and control circuitry for controlling the power actuator to control the power delivered by the power actuator to the heating element, wherein the control circuitry is configured to: receive the temperature measurements from the temperature sensor; control the power delivered to the heating element by the power actuator in dependence upon the temperature measurements and at least one control parameter, to maintain the heating surface of the heater at a desired operating temperature; wherein the control circuitry includes an idle mode of operation in which the at least one control parameter is set to a first value and a boost mode of operation in which the at least one control parameter is set to a second value that is higher than the first value; wherein the control circuitry is configured to exit the idle mode of operation and enter the boost mode of operation in the case that the control circuitry detects initiation of a load induced cooling effect of the heater; and wherein the control circuitry is configured to exit the boost mode of operation and enter the idle mode of operation when the control circuitry detects a termination of the load induced cooling effect of the of the heater.

According to a further aspect of the invention, there is provided a microprocessor comprising instructions to run the method as described above.

According a yet further aspect of the invention, there is provided computer program product comprising computer implementable instructions for causing a programmable computer device to carry out the method as described above.

**Brief Description of the Drawings**

Embodiments of the invention will now be described, by way of example only, and with reference to the drawings in which:

Figure 1a illustrates a hair styler;

Figure 1b illustrates a hair styler in use on hair;

Figure 2 is a cross-sectional schematic diagram through a heater plate;

Figure 3 is a schematic block diagram showing a thermal control system;

Figure 4 is a flow chart of a control method that may be performed by the thermal control system;

Figure 5 is a flow chart of a further control method that may be performed by the thermal control system;

Figure 6 is a flow chart of a further control method that may be performed by the thermal control system

Figure 7 is a schematic block diagram showing another thermal control system;

Figure 8 is a flow chart of a further control method that may be performed by the thermal control system;

Figure 9 is a flow chart of a further control method that may be performed by the thermal control system; and

Figure 10 is a flow chart of a further control method that may be performed by the thermal control system.

In the Figures, like elements are indicated by like reference numerals throughout.

**Detailed Description of Preferred Embodiments**

The present embodiments represent the best ways known to the applicants of putting the invention into practice. However, they are not the only ways in which this can be achieved.

*Overview of hair styler*

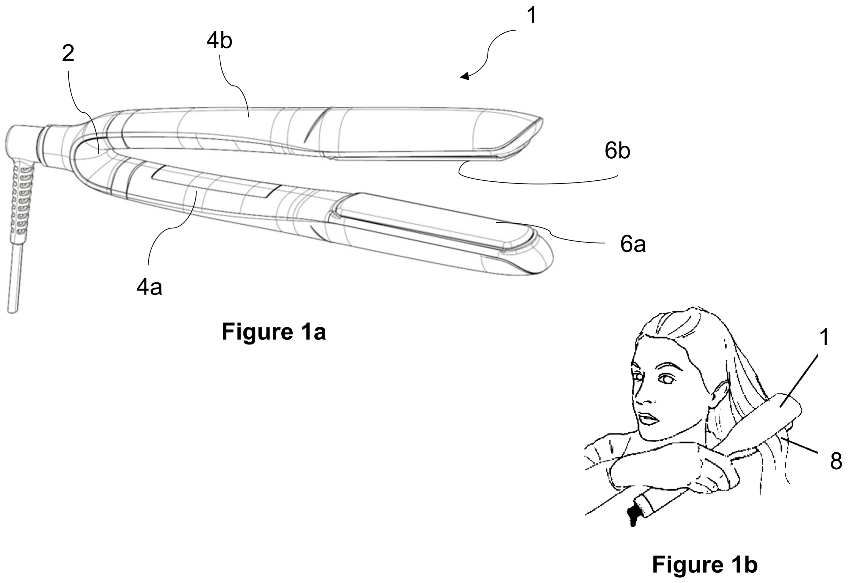

Figure 1a illustrates a hair styler 1 which employs a thermal control system. The hair styler 1 includes a first movable arm 4a and a second movable arm 4b, which are coupled together by a hinge mechanism 2. The first and second movable arms 4a, 4b oppose one another and are movable relative to one other by virtue of the hinge mechanism 2. Thus, the first and second arms 4a, 4b can be brought together, into a closed configuration, or moved apart, into an open configuration, by a user during use.

The first arm 4a bears a first heating plate 6a, and the second arm 4b bears a second heating plate 6b. The first and second heating plates 6a, 6b oppose one another and, in use, are brought together as the first and second arms 4a, 4b are brought together. They are also separated as the first and second arms 4a, 4b are moved apart. The heating plates 6a, 6b form part of respective heaters.

The hinge mechanism 2 can incorporate any suitable means for allowing the first and second arms 4a, 4b to be moved relative to one other. The hinge mechanism 2 may be configured to bias the first and second arms 4a, 4b into the open configuration, such that the user is required to apply pressure to the arms 4a, 4b to close them together, and such that the arms 4a, 4b automatically open once the pressure is removed. For example, the hinge mechanism 2 may incorporate a leaf spring or a coiled spring to provide this bias. Alternatively or additionally, the first and second arms 4a, 4b may be formed in a unitary manner (e.g. from a plastics material) with a "U" shaped middle part provided between the first and second arms 4a, 4b, the "U" shaped middle part being able to resiliently flex to allow opening and closing of the first and second arms 4a, 4b.

The electrical and electronic circuitry of the hair styler 1 is housed in the first arm 4a. The electrical and electronic circuitry of the hair styler 1 could instead be housed in the second arm 4b, or split between arms 4a and 4b.

A switch may be provided on the first arm to enable the styler 1 to be turned on or off. A user interface may also be provided. The user interface may include a light to indicate whether the power is on. A sound can also be played by a sound generator when the styler 1 is switched on and ready to use. In alternative embodiments the user interface may include additional components (such as, for example, a display means, to provide the user with more information on the operational status of the styler and/or a user input means to allow the user to set, for example a desired operating temperature).

Figure 1b illustrates the styler in use: the hair is clamped between the two heating plates 6a, 6b and then the styler is moved such that the hair is pulled through the styler between the first and second heating plates 6a, 6b. Heat passes from hair contacting surfaces of the heating plates 6a, 6b into the hair to allow the styling of the user's hair using the device. The hair is heated above its glass transition temperature, after which the shape of the hair can be manipulated. By passing and clamping the hair between two plates 6a, 6b which have flat faces, the hair can be 'straightened'. Alternatively, hair can be wrapped around the arms 4a, 4b of the styler and clamped between the plates 6a, 6b, such that when the styler is pulled downwards through the hair, the hair can be 'curled'.

*Heater and thermal control system*

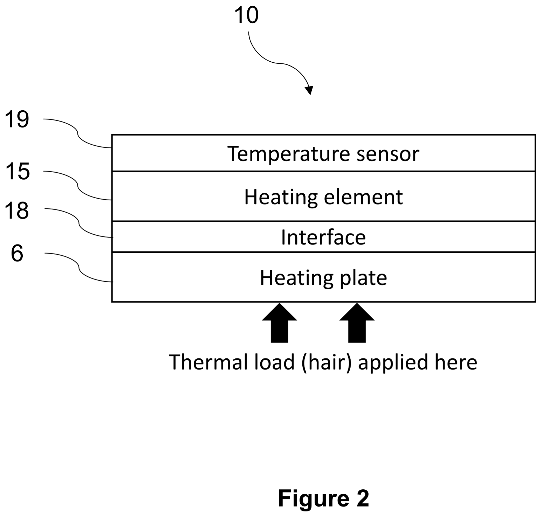

Figure 2 is a schematic cross-sectional view through the heater 10 (across the width of the arm 4a, 4b) that shows the main components of the heater 10 (also referred to as a heater stack or a thermal stack) carried on each arm 4a, 4b. As shown, the heater 10 includes a heating element 15 and a heating plate 6 which are thermally connected via an interface 18.

Typically, the heating element 15 is formed from a ceramic material and the heating plate 6 is formed from aluminium. The interface 18 typically comprises a thermal paste which is thermally conducting, for example aluminium oxide paste. The interface 18 may additionally or alternatively comprise an electrical barrier. This may comprise a layer of tightly sintered ceramic and/or a layer of a thermally stable plastic, such as polyamide tape. Typically, such a barrier will be present in the heater 10 in order to provide electrical insulation for improved safety, or to conform to standards or regulations. As a specific example, some territories have regulations which require electrical products such as hair stylers to include a layer of polyamide tape between electrical heating means and external surfaces for safety purposes (e.g. to reduce the risk of the user receiving an electric shock).

The heater 10 also includes a temperature sensor 19 (such as a thermistor) which is disposed on the heating element 15, on the opposite side to the heating plate 6. The temperature measured by the electronics via the temperature sensor 19 therefore is not the actual temperature of the hair contacting surface of the heating plate 6 (or the surface of the hair); rather it measures the temperature of the heating element 15, $T_C$. A sensor is not placed in the region of the heating plate 6 because on high voltage systems there needs to be an isolation clearance distance between those conductive parts which can be touched by the user (including the heating plate 6) and the electric circuit. Although electrically insulating materials could be used, this would result in greater thermal losses across the system.

Instead, the surface temperature of the plates 6 can be determined (estimated) by measuring the electrical power, $P$, and the temperature of the heating element, $T_C$. Due to the thermal resistance between the heating element 15 and the heating plate 6 (and due to the thermal resistance of the heating element 15 and the heating plate 6 themselves) there is a temperature drop across the assembly which is proportional to the thermal power provided by the heating element 15. The proportionality constant is the combined thermal resistance of the heating element 15, the heating plate 6 and the interface 18 between them. It has been identified empirically that the losses in converting electrical power to thermal power are small and generally constant. Therefore, measurement of the electrical power, $P$, supplied to the heating element 15 can be used to infer the thermal power dispersed from the heating element 15, across the interface 18 and through the heating plate 6, and from this thermal power, the temperature difference between the surface temperature of the heating plate 6 and the measured temperature $T_C$ of the heating element 15 can be estimated. Thus, the temperature of the hair contacting surface of the heating plate 6 can be determined by combining the measured temperature $T_C$ with the estimated temperature difference. The determined temperature of the hair contacting surface of the heating plate 6 can then be compared with the desired operating temperature and the difference used to control the amount of electrical power that is delivered to the heating element 15. Applicant's previous application WO2019/122839 provides further details on this aspect of the system.

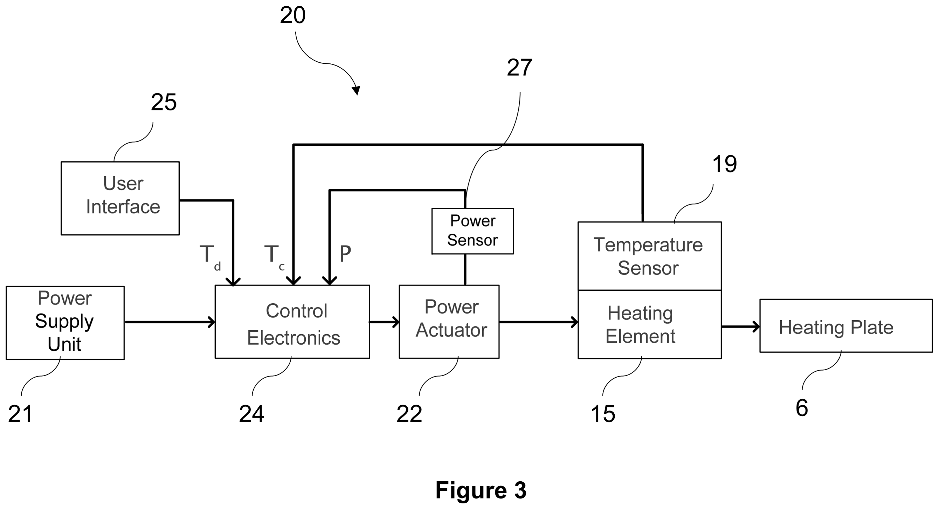

Figure 3 is a schematic block diagram of the thermal control system 20 used to control delivery of electrical power to a heater 10. The thermal control system 20 includes a power supply unit 21 (which may be mains and/or battery powered), control electronics 24, a power actuator 22, a user interface 25, a power sensor 27, a heating element 15 and the temperature sensor 19. For completeness, Figure 3 also shows the heating plate 6. The heating element 15 is thermally coupled to the temperature sensor 19, which provides measurement of the temperature $T_C$ of the heating element 15 to the control electronics 24.

The power actuator 22 could include a triac and/or any suitable means for controlling power output to the heating element 15. The power actuator 22 can vary the power delivered to the heating element 15 either by varying the current and/or the voltage applied to the heating element 15. In a preferred embodiment, the control electronics 24 outputs a control signal that is a pulse width modulated (PWM) signal that switches the power actuator 22 on and off multiple times per second, and wherein the power delivered to the heating element 15 is varied by varying the mark-space ratio of the PWM control signal.

The power sensor 27 measures the electrical power $P$ output by the power actuator 22, and provides this measurement of power $P$ to the control electronics 24 (which may be a microcontroller or microprocessor or it could be a dedicated hardware (ASIC) controller). As discussed above, the power measure is used by the control electronics 24 to estimate the temperature difference between the temperature of the heating element 15 and the temperature of the hair contacting surface of the heating plate 6 and from this temperature difference the control electronics 24 can determine the temperature of the hair contacting surface of the heating plate 6.

The control electronics 24 (which may include a PID (proportional, integral, derivative) controller) then control the power actuator 22 based on the following difference (or error) between the determined temperature of the hair contacting surface of the heating plate 6 and a desired temperature $T_d$ (defined in the control electronics 24 or by the user via the user interface 25):

$$e = T_d - T_C + R_{th}\, P \qquad\qquad \text{Equation 1}$$

where $R_{th}$ is the thermal resistance between the heating element 15 and the hair contacting surface of the heating plate 6 (which is constant and determined in advance in a calibration routine), $T_d$ is the desired temperature of the hair contacting surface of the heating plate 6, $T_C$ is the measured temperature of the heating element 15 and $P$ is the power measurement from the power sensor. Specifically, the control electronics 24 vary the power delivered to the heating element 15 to drive this error to zero using a PID control strategy.

Of course, an alternative (and equivalent) way of interpreting the above error signal, is to say that the temperature drop between the heating element 15 and the hair contacting surface of the heating plate 6 is being used to determine a desired temperature of the heating element 15 (by adding the temperature drop to the desired operating temperature, $T_d$) and then the difference between the actual temperature of the heating element 15 (as measured by the temperature sensor) and the desired temperature of the heating element 15 is being used by the control electronics 24 to control the electrical power delivered to the heating element 15.

*Boost Heating process*

Upon the user switching on the hair styler 1 via the user interface 25, the target temperature $T_d$ is set to the idle temperature, $T_{idle}$. In the exemplary embodiment, the idle temperature, $T_{idle}$, is 185 degrees Celsius - which could be a pre-set value or it could be user defined via the user interface 25. The idle temperature may be a temperature between 150 and 200 degrees Celsius, preferably between 160 and 195, preferably between 170 and 190, and more preferably between 180 and 185 degrees Celsius. If the hair styler 1 is configured to be used on wet hair, the idle temperature will be set at a lower value, for example between 100 and 140 degrees Celsius, preferably between 110 and 130, more preferably between 120 and 125. In response to receiving the new set point temperature, the control electronics 24 determines and outputs suitable control signals (as described above) to the power actuator 22 to cause power to be delivered to the heating element 15 which in turn causes the heater plate 6 to be heated up to the desired temperature. The control electronics 24 will receive updated temperature $T_C$ and power $P$ measurements many times per second and will vary the control signal output to the power actuator 22 in order to heat the heating plate 6 to the desired temperature $T_d$ in as fast a time as possible without (significantly) overshooting the target temperature.

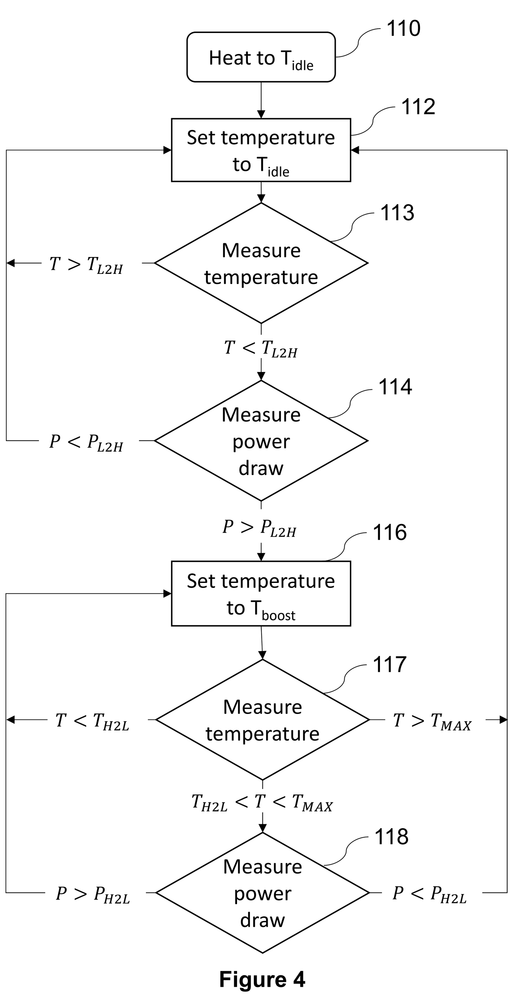

Once the heating plate 6 is at the desired idle temperature, the hair styling apparatus is ready to be used by the user and an appropriate indication is provided to the user via the user interface 25. The control electronics 24 will continue to monitor the temperature $T_C$ and the delivered power $P$ and will vary the control signal sent to the power actuator 22 to maintain the temperature of the heating plate at the idle temperature $T_{idle}$. When there is no hair present, some heat will be lost to the surroundings and so some nominal amount of heating is required to maintain the heating plate 6 at the desired temperature $T_d$. However, when the user's hair is brought into contact with the surface of the heating plate 6, a significant amount of heat will be absorbed by the user's hair and this will reduce the temperature of the heating plate 6. The control electronics 24 have to react to this quickly to heat the heater plate 6 back to the desired operating temperature $T_d$ and similarly have to react when the hair is removed from the heating plate 6 at the end of the styling process, to prevent the heating plate 6 being heated above the desired operating temperature $T_d$. To help achieve this, the control electronics 24 have a process to boost (increase) the desired operating temperature $T_d$ of the heating plate 6 when the control electronics 24 detect that the user's hair comes into contact with the surface of the heating plate 6. This boost process runs in parallel with the normal control process described above that drives the heating plate 6 to a desired operating temperature using the error defined in Equation 1, with the boost process defining the desired temperature $T_d$ that is used in Equation 1 at that time. The way in which this boost process is controlled by the control electronics 24 in a preferred embodiment will now be described with reference to Figure 4.

As illustrated in step 110, this boost process operates once the heating plate 6 has been heated to the desired idle operating temperature, $T_{idle}$. At this stage, the hair has not been placed on the heating plate 6 and so the control electronics 24 maintain the desired operating temperature at $T_{idle}$ in step 112. At this stage, the control electronics can be said to be operating in an "idle" operating mode.

At step 113 the control electronics 24 compare the latest temperature measurement (which is typically an instantaneous measurement although in some embodiments may be an average of the last M temperature measurements from the temperature sensor 19, where M is an integer) with a predefined 'low-to-high' threshold, $T_{L2H}$ (which will be set about 1 to 6 degrees Celsius lower than $T_{idle}$). If the temperature measurement is above this threshold, then it indicates the temperature of the heating plate 6 is close to the desired idle temperature $T_{idle}$ and so, in this case, the control electronics 24 return to step 112 where the control electronics 24 maintains the desired temperature $(T_d)$ of the heating plate 6 at the idle temperature, $T_{idle}$. If the temperature measurement drops below the $T_{L2H}$ threshold, then this indicates that hair may have been placed on the heating plate 6. To confirm this, the control electronics proceed to step 114 to evaluate the power measurement.

Specifically, at step 114, the control electronics 24 compare the latest power measurement (which may be an average of the last N power measurements from the power sensor 27, where N is an integer) with a pre-defined 'low-to-high' threshold, $P_{L2H}$. If the power measurement is below this threshold, then this indicates that the user's hair is not touching the hair contacting surface of the heating plate 6 and so, in this case, the control electronics 24 return to step 112 where the control electronics 24 maintains the desired temperature $(T_d)$ of the heating plate 6 at the idle temperature, $T_{idle}$.

If a user has loaded hair on to the heating plate 6, then the hair will absorb a significant amount of the heat energy from the plate 6, which will cause the plate 6 to cool down. In order to maintain the temperature of the plate 6, the control electronics 24 increase the power to the heating element 15. This is to counteract the load-induced cooling effect of the hair. If the power measurement is greater than (or equal to) the low-to-high threshold, $P_{L2H}$, then this indicates that hair has been loaded onto the hair contacting surface of the heating plate 6. Therefore, in this case, the control electronics 24 set, in step 116, the desired operating temperature $T_d$ to a boost temperature, $T_{boost}$ that is higher than the idle temperature, $T_{idle}$. Thus, at this stage the control electronics can be said to exit the idle mode of operation and to enter a "boost" mode of operation. In this exemplary embodiment $T_{boost}$ is 210 degrees Celsius. The boost temperature, $T_{boost}$, is typically 5 to 25 degrees Celsius above the idle temperature, $T_{idle}$. The boost temperature, $T_{boost}$, may preferably be between 190 and 230 degrees, more preferably between 200 and 220 degrees Celsius, and even more preferably between 205 and 210 degrees Celsius. This new desired operating temperature $(T_d)$ is then used in the main thermal control process (described above) that is used to drive the error defined in Equation 1 above to zero.

In step 117 of the boost process, the control electronics 24 compare the latest temperature measurement with two predefined thresholds. The first is $T_{MAX}$, that is the maximum temperature allowed during the boost mode. If the temperature measurement is greater than $T_{MAX}$, then the control electronics 24 immediately return to step 112, where the desired operating temperature $(T_d)$ that is used in Equation 1 is set again at the idle temperature, $T_{idle}$ (that is the control electronics 24 exits the boost mode of operation and enters the idle mode once again). The second threshold is a predefined 'high-to-low' threshold, $T_{H2L}$ (which is typically set 1 to 6 degrees Celsius below $T_{idle}$). If the temperature measurement is below this second threshold, then this indicates that plate 6 is still below the idle temperature, $T_{idle}$, therefore the control electronics 24 return to step 116 where the control electronics 24 maintains the desired temperature $(T_d)$ of the heating plate 6 at the boost temperature, $T_{boost}$. That is the control electronics determine that there is no need to consider the power measurements because the temperature of the plate is still below the idle temperature, $T_{idle}$. There is typically a small delay in the availability of the power measurements, as a moving average is used, whereas instantaneous temperature measurements are normally used. Step 117 therefore enables the system to react more quickly to changes in temperature and so acts as a safety-check to prevent overheating of the heating plate 6 and removes the need for processing the power measurements if the temperature is still below the idle temperature. If the temperature measurement is above the $T_{H2L}$ threshold (but below $T_{MAX}$), the boost process proceeds to step 118.

In step 118, the control electronics 24 compare the latest power measurement with a pre-defined 'high-to-low' threshold, $P_{H2L}$ that is higher than the 'low-to-high' threshold $P_{L2H}$. If the power measurement is greater than $P_{H2L}$, then this indicates that the user's hair is still touching the hair contacting surface of the heating plate 6 (the load induced cooling effect is still present) and so, in this case, the control electronics 24 return to step 116 where the control electronics 24 maintains the desired temperature $(T_d)$ of the heating plate 6 at the boost temperature, $T_{boost}$. If the power measurement is less than (or equal to) $P_{H2L}$, then this indicates that the user's hair is no longer touching the hair contacting surface of the heating plate 6 or that the hair is now at the temperature of the plate and in either instance the load induced cooling effect has been terminated. In this case, the control electronics 24 return to step 112, where the desired operating temperature $(T_d)$ that is used in Equation 1 is set again at the idle temperature, $T_{idle}$ (that is the control electronics 24 exits the boost mode of operation and enters the idle mode once again).

Thus, when the user's hair is brought into contact with the heating plate 6, the control electronics 24 detect this (by detecting when the power delivered to the heating element 15 is greater than $P_{L2H}$) and increase the desired operating temperature $(T_d)$ in order to increase (or boost) the power that is delivered to the heating element 15 which helps to maintain the temperature of the heating plate 6 even though the user's hair has been brought into contact with the heating plate 6. This elevated desired operating temperature $(T_{boost})$ is then used in equation 1 until the control electronics 24 detect that the user's hair has been removed from the heating plate 6 (by detecting when the power delivered to the heating element 15 is less than $P_{H2L}$), at which point the control electronics 24 reduce the desired operating temperature $(T_d)$ used in Equation 1 back to the idle operating temperature $T_{idle}$ which helps to prevent the heating plate 6 being over heated when the hair is removed from the heating plate 6.

The use of four different thresholds ($T_{L2H}$, $P_{L2H}$, $T_{H2L}$ and $P_{H2L}$) in the above boost process allows the system to be tuned to be sensitive to both boosting (when hair is applied) and unboosting (when hair is removed) from the heating plate 6. The low-to-high power threshold, $P_{L2H}$, is lower than the high-to-low power threshold, $P_{H2L}$, which means that the system can be made sensitive to the loading of hair as the threshold to enter boosting (the low-to-high threshold, $P_{L2H}$) can be set relatively low, and the threshold below which boosting is stopped (high-to-low threshold, $P_{H2L}$) can be made comparatively high to reduce the likelihood of the hair overheating. The low-to-high temperature threshold, $T_{L2H}$, can be higher or lower than, or the same as, the low-to-high temperature threshold, $T_{H2L}$.

*Modified Boost Process*

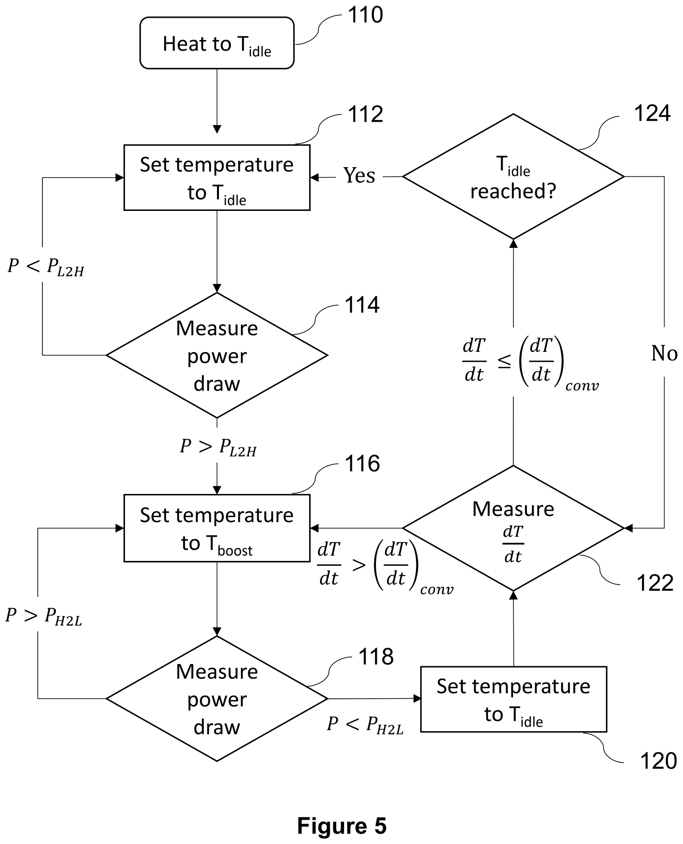

Figure 5 illustrates a modified boost process that can be used in alternative embodiments. In the modified boost process illustrated in Figure 5, instead of returning to step 112 when the power measurement falls below the high-to-low threshold, the process proceeds to step 120 where the desired temperature $(T_d)$ is set to the idle temperature, $T_{idle}$. Then in step 122 an additional check is performed whilst the heating plate 6 is cooling down from the boost temperature, $T_{boost}$, to the idle temperature, $T_{idle}$, to make sure that the rate of cooling (dT/dt) of the heating plate 6 does not exceed a threshold corresponding to the natural cooling rate caused by convection (which may be predefined or calculated in a calibration routine). If the measured cooling rate of the heating plate 6 exceeds that of natural cooling caused by convection, then this indicates that hair has been introduced again onto the heating plate 6 and in this case, the process returns to step 116 where the desired temperature is boosted again to $T_{boost}$. Otherwise, once the temperature of the heating plate 6 reaches the desired idle temperature, $T_{idle}$, in step 124, the process returns to the idle mode in step 112 so that the boost process can be repeated again if more hair is subsequently loaded onto the heating plate 6. This enables the control electronics 24 to adapt quickly if hair is unloaded and loaded onto the heating plate 6 in quick succession.

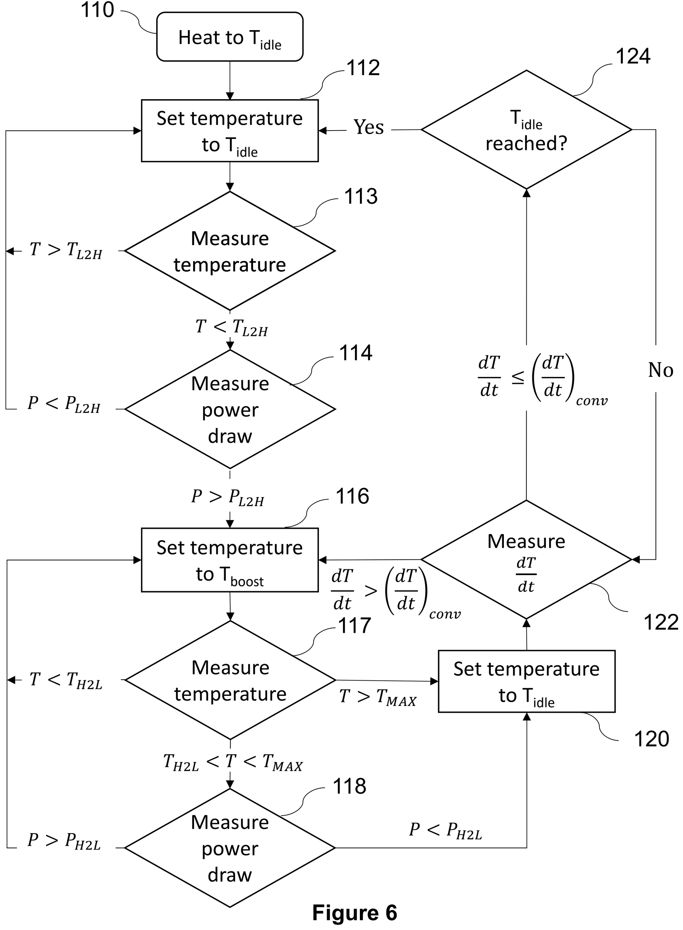

The modified boost process described above may also include steps corresponding to steps 113 and 117 in Figure 4, the result of which determines whether the control electronics proceed to evaluate the power measurement. Such a process is illustrated in Figure 6 and will not be described further to avoid repetition.

*Additional Heaters*

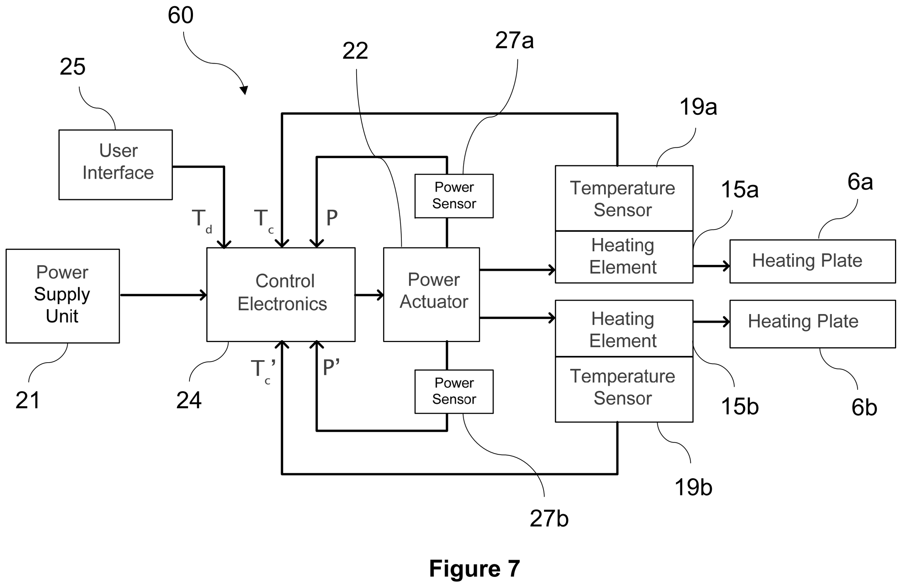

The above description explains the control strategy for controlling the temperature of a single heating plate 6. As discussed above in the hair styler of Figure 1, there are two heaters (heating elements and heating plates). Parallel control loops may be provided for controlling the two heaters independently in the manner discussed above. Alternatively, one controller may be provided to control the heating of both heaters - as illustrated in Figure 7.

As shown in Figure 7, a thermal control system 60 includes a power supply unit 21, control electronics 24, a power actuator 22 and a user interface 25. These elements are similar to the elements described above in Figure 3, except that the control electronics 24 and power actuator 22 of thermal control system 70 are adapted to control the heating of two heaters. Heating element 15a, temperature sensor 19a, and heating plate 6a form part of a first heater, and heating element 15b, temperature sensor 19b, and heating plate 6b form part of a second heater.

A first power sensor 27a measures the electrical power **P** output by the power actuator 22 to the first heater, and provides this measurement of power **P** to the control electronics 24. A second power sensor 27b measures the electrical power **P'** output by the power actuator 22 to the second heater, and provides this measurement of power **P'** to the control electronics 24.

The thermal control system 60 is configured to vary the electrical power supplied to the heating elements 15a and 15b in order to heat the heating plates 6a and 6b to the desired or target temperature, $T_d$. The control electronics 24 include the above described boost process to boost the heating of the heating elements 15 and will not be described again.

**Modifications and Alternatives**

As those skilled in the art will appreciate, various modifications and alternatives can be made to the above described control system and method.

In the embodiment described above, the hair styling device included first and second arms, each of which included a heater for heating hair. The invention can, of course, be carried out using a hair styling device that has a single arm and hair styling head.

The above methods describe detection of the load induced cooling effect through measurement of the power supplied to the heating elements 15 and temperature of those heating elements 15. In an alternative embodiment, the power measurement that is used could be a measure of the power drawn from the power supply. Whilst such a power measurement will be less accurate as a measure of the power delivered to the heating element (as it will also include power supplied to the control electronics and the like), it is adequate for sensing changes to the power caused by hair being loaded onto the heater plates.

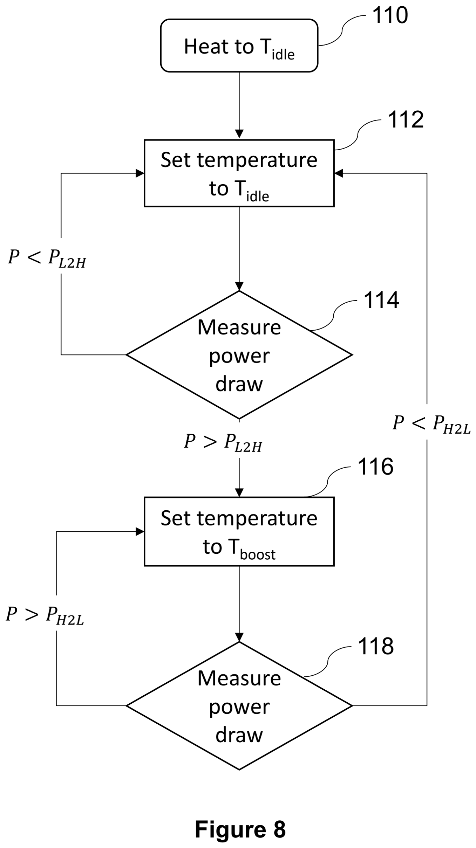

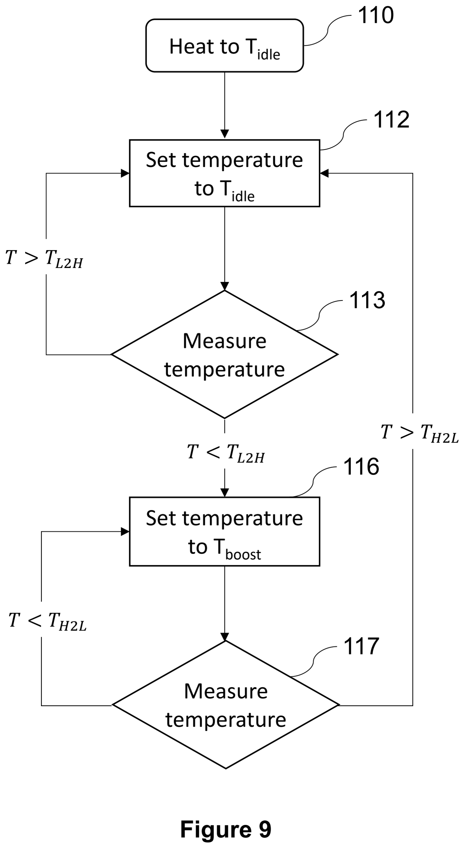

The load induced cooling effect could also be determined through measurement of the power or measurement of the temperature individually rather than through a combination. Figure 8 is a flow chart illustrating the steps taken by the control electronics for the detection of a load induced cooling effect through only measurement of the power (the power measurement could be either the power supplied to the heating elements or the power drawn from the power supply). A detailed description of the method steps illustrated in Figure 8 is not given as they are the same as the correspondingly numbered steps described above with reference to Figure 4. Similarly, the load induced cooling effect can also be detected through only the measurement of temperature ($T_C$) of the heating element 15, as illustrated in the flow chart shown in Figure 9. Again, a detailed description of the method steps illustrated in Figure 9 is not given as they are the same as the correspondingly numbered steps described above with reference to Figure 4.

The idle mode and the boost mode are described above in which the value of a desired operating temperature of the surface of the heater plate is changed in order to boost the power supplied to the heater plate(s). As those skilled in the art will appreciate, in addition to or instead of changing the desired temperature, another parameter of the control electronics may be changed. For example, one or more gains of the PID controller can be varied in order to boost the power supplied to the heater plate(s). Thus, for example, the proportional gain could be increased during the boost mode and then reduced once the temperature of the plate has returned to the desired operating temperature.

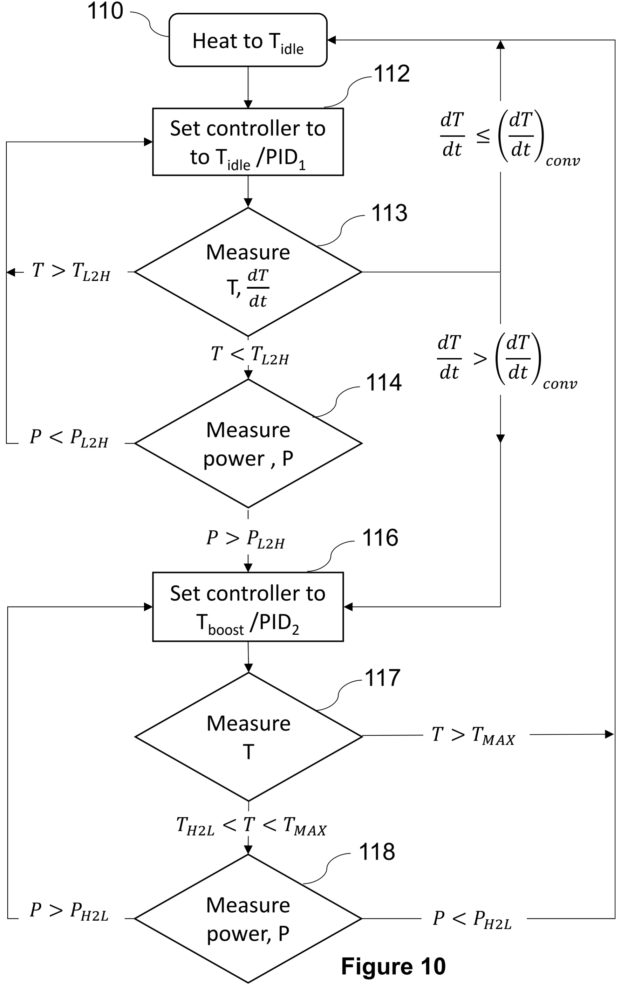

Figure 10 shows a further exemplary flow chart illustrating the steps taken by the control electronics 24 to control the entering of a boost mode from an idle mode in response to the detection of a load induced cooling effect on the heating plate(s) 6 and the returning to the idle mode in response to the detection of the termination of the load induced cooling effect. Most of the method steps are the same as the correspondingly numbered steps described above with reference to Figure 4 and so will not be described again. However, in this example, at step 112 the control electronics 24 are set to operate in the idle mode of operation by setting one or more control parameters which may comprise the desired operating temperature (set at $T_{idle}$), the PID gain coefficients (set at $PID_1$), or a combination of the two. Similarly, at step 116 the control electronics 24 are set to operate in the boost mode of operation by setting one or more control parameters which may comprise the desired operating temperature (set at $T_{boost}$), the PID gain coefficients (set at $PID_2$), or a combination of the two. As shown in step 113, when measuring the temperature, the control electronics 24 also calculate the rate of cooling (dT/dt) of the heating plate 6. If the measured cooling rate of the heating plate 6 exceeds that of natural cooling caused by convection, this indicates that hair has been introduced onto the heating plate 6. In this case, the control electronics 24 will move directly to the boost mode of operation (step 116) without considering the power measurements (in step 114). Thus in this alternative method, the control electronics can enter the boost mode either by detecting that the rate of change of the temperature is greater than that associated with natural convection or if the measured power exceeds the $P_{L2H}$ threshold.

In the above embodiments that varied the target temperature, a single constant boost temperature, $T_{boost}$, was used. In alternative embodiments, the boost temperature may not be defined as a single temperature, but can be variable depending on the amount of power that is being delivered to the heater or the rate of change of the measured temperature. For example, if the amount of power delivered to the heater is greater than P1 but less than P2, then $T_{boost}$ may be set at one value but if the power delivered to the heater is greater than P2 then a higher $T_{boost}$ may be set. The boost temperature, $T_{boost}$, may also be determined by the thermal characteristics of the heater. For example, in some implementations, a layer of polyamide tape will be provided between the electrical heating element and external surfaces (as required by the regulations in some territories). The provision of such polyamide tape increases the thermal insulation, and so there will be a greater difference in temperatures between the heating element 15 and the hair contacting surface of the heater plate 6. In such an arrangement, the boost temperature $T_{boost}$, can be set higher than for heaters that do not have the polyamide tape.

The temperature sensor may be located in a different position within the heating apparatus, for example within the heating element. Alternatively, the temperature sensor may be a separate component in thermal contact with the heating apparatus. If the resistance of the heating element 15 changes with the temperature of the heating element 15, then there is no need for a separate temperature sensor. In this case, the control electronics can determine the temperature of the heating element by sensing the resistance of the heating element - which it can do by measuring the current through a resistance connected to the heating element 15.

The electrical power may be measured in a variety of manners. For example, as an alternative to measuring the power output by the actuator 22 to the heater, the voltage or the current applied to the heater can be measured. The power can then be calculated from this measurement using the conventional $P=I^2R$ or $P=V^2/R$ equations. The curve of electrical resistance of the heater with respect to temperature can be determined at the relevant temperature range and used for this calculation.

The heating plate is not required to be of the shape of a plate, as represented in the figures and described above. The heating surface can have any shape. It may comprise a textured surface plate, such as a hair 'crimper'. Alternatively, the heating surface may be defined by the outer surface of an elongate rod to provide a 'curling tong' around which hair can be wrapped.

Those skilled in the art will understand that the control electronics described above can be implemented by hardware or by a programmable computer device such as a microprocessor (CPU) that executes instructions stored in a memory to perform the various control methods described above. The invention therefore also extends to a computer implemented instructions product (signal or tangible medium) comprising computer implementable instructions which, when run on a programmable computer device, cause the programmable computer device to perform the control methods described above.

Furthermore, the control methods described above can be implemented in many other devices employing thermal control, such as electric water heaters, cooking devices and coffee machine makers.

No doubt many other effective alternatives will occur to the skilled person. It will be understood that the invention is not limited to the described embodiments and encompasses modifications apparent to those skilled in the art lying within the scope of the claims appended hereto.

Throughout the description and claims of this specification, the words "comprise" and "contain" and variations of the words, for example "comprising" and "containing", means "including but not limited to", and is not intended to (and does not) exclude other components, integers or steps.

**Clauses**

1. Heating apparatus for heating a load, the heating apparatus comprising:

a heater having a heating element (15) for receiving electrical power and for converting the electrical power into heat to heat a heating surface (6) of the heater;
a temperature sensor (19) for sensing and outputting measurements of a temperature ($T_C$) of the heater;
a power actuator (22) for providing the electrical power to the heating element of the heater; and
control circuitry (24) for controlling the power actuator (22) to control the power delivered by the power actuator to the heating element, wherein the control circuitry (24) is configured to:

receive temperature measurements ($T_C$) from the temperature sensor (19);
control the power delivered to the heating element (15) by the power actuator (22) in dependence upon the temperature measurements ($T_C$) and at least one control parameter, to maintain the heater at a desired operating temperature ($T_d$);

wherein the control circuitry (24) includes an idle mode of operation in which at least one control parameter is set to a first value and a boost mode of operation in which the at least one control parameter is set to a second value that is higher than the first value;
wherein the control circuitry (24) is configured to exit the idle mode of operation and enter the boost mode of operation in the case that the control circuitry (24) detects initiation of a load induced cooling effect of the heater; and
wherein the control circuitry is configured to exit the boost mode of operation and enter the idle mode of operation when the control circuitry (24) detects a termination of the load induced cooling effect of the heater.

2. Heating apparatus according to Clause 1, wherein the at least one control parameter comprises one or more of: the desired operating temperature ($T_d$) of the heater and at least one PID gain coefficient.

3. Heating apparatus according to Clause 1 or 2, further comprising a power sensor (27) for sensing and outputting measurements of the electrical power provided to the heating element by the power actuator (22); wherein the control circuitry (24) is further configured to receive the power measurements (P) from the power sensor (27).

4. Heating apparatus according to Clause 3, wherein the control circuitry (24) is configured to exit the idle mode of operation and enter the boost mode of operation in the case that the control circuitry (24) detects a change of the power measurements (P) that are indicative of the initiation of said load induced cooling effect of the heater.

5. Heating apparatus according to Clause 3 or 4, wherein the control circuitry (24) is configured to exit the boost mode of operation and enter the idle mode of operation when the control circuitry (24) detects a change of the power measurements (P) that are indicative of the termination of the load induced cooling effect of the heater.

6. Heating apparatus according to Clause 4 or 5, wherein said load induced cooling effect of the heater is detected by an increase in the power measurements (P) from the power sensor (27).

7. Heating apparatus of Clause 6, wherein the control circuitry (24) is configured to exit the idle mode of operation and enter the boost mode of operation in the case that the control circuitry (24) detects the power measurement (P) is greater than a first threshold power.

8. Heating apparatus of Clause 6 or 7, wherein the control circuitry (24) is configured to exit the boost mode of operation and enter the idle mode of operation in the case that the control circuitry (24) detects the power measurement (P) is lower than a second threshold power.

9. Heating apparatus of Clause 8, wherein the first threshold power is lower than the second threshold power.

10. Heating apparatus according any preceding clause, wherein the control circuitry (24) is configured to exit the idle mode of operation and enter the boost mode of operation in the case that the control circuitry (24) detects a change of the temperature measurements ($T_C$) that is indicative of the initiation of said load induced cooling effect of the heater.

11. Heating apparatus according to any preceding clause, wherein the control circuitry (24) is configured to exit the boost mode of operation and enter the idle mode of operation in the case that the control circuitry (24) detects a change of the temperature measurements ($T_C$) that is indicative of the termination of the load induced cooling effect of the heater.

12. Heating apparatus according to any preceding clause, wherein the control circuitry (24) is configured to detect the initiation or termination of said load induced cooling effect of the heater dependent on whether the temperature measurements ($T_C$) are within a defined range.

13. Heating apparatus according to any preceding clause, wherein the control circuitry (24) is configured to exit the boost mode of operation and enter the idle mode of operation in the case that the control circuitry (24) detects a temperature greater than a maximum threshold temperature ($T_{max}$), wherein the maximum threshold temperature ($T_{max}$) is greater than an operating temperature of the boost mode of operation ($T_{boost}$).

14. Heating apparatus according to any preceding clause, wherein the control circuitry (24) is configured to remain in the boost mode of operation in the case that control circuitry (24) detects a temperature below a first threshold temperature ($T_{H2L}$).

15. Heating apparatus according to any preceding clause, wherein the control circuitry (24) is configured to monitor for or detect termination of said load induced cooling effect of the heater in the case that the temperature measurement is between a first threshold temperature ($T_{H2L}$) and a maximum threshold temperature ($T_{max}$).

16. Heating apparatus according to Clause 14 or 15, wherein the first threshold temperature is lower than an operating temperature of the idle mode of operation ($T_{idle}$).

17. Heating apparatus according to any preceding clause, wherein the control circuitry (24) is configured to remain in the idle mode of operation in the case that the control circuitry (24) detects a temperature greater than a second threshold temperature ($T_{L2H}$).

18. Heating apparatus according any preceding clause, wherein the control circuitry (24) is configured to monitor for or detect initiation of said load induced cooling effect of the heater in the case that the temperature measurement is below a second threshold temperature ($T_{L2H}$).

19. Heating apparatus according to Clause 17 or 18, wherein the second threshold temperature ($T_{L2H}$) is lower than an operating temperature of the idle mode of operation ($T_{idle}$), preferably 1 to 6 degrees lower.

20. Heating apparatus of any preceding clause, wherein the control circuitry (24) is configured to exit the idle mode of operation and enter the boost mode of operation in the case that the control circuitry (24) detects a rate of change of temperature of the heater that is indicative of the initiation of the load induced cooling effect of the heater.

21. Heating apparatus of Clause 20, wherein the control circuitry (24) is configured to exit the idle mode of operation and enter the boost mode of operation if the determined rate of change of temperature is greater than a threshold cooling rate.

22. Heating apparatus of any preceding clause, wherein the control circuitry (24) is configured to exit the boost mode and enter the idle mode in the case that the control circuitry (24) detects a rate of change of temperature of the heater that is below a threshold cooling rate, otherwise the control circuitry (24) is configured to remain in the boost mode.

23. Heating apparatus of any preceding clause, wherein the at least one control parameter comprises a desired operating temperature ($T_d$) of the heater and wherein the first value and the second value are both above the glass transition temperature of hair.

24. Heating apparatus of any preceding clause, wherein the desired operating temperature ($T_d$) of the heater is the desired operating temperature ($T_d$) of the heating surface (6) of the heater, the heating surface (6) of the heater preferably being configured to contact hair.

25. Heating apparatus of any of Clauses 3 to 24, wherein the temperature sensor is configured to sense the temperature of the heating element and wherein the control circuitry (24) is configured to use the power measurement (P) to determine a temperature difference between the heating element (15) and the heating surface (6) of the heater.

26. Heating apparatus of Clause 25, wherein the control circuitry (24) is further configured to determine the rate of change of temperature of the heating surface (6).

27. Heating apparatus of any preceding clause, wherein the heating apparatus comprises a hair styler or hair dryer.

28. Heating apparatus according to Clause 27, wherein the hair styler comprises first and second mutually-opposing arms adapted for movement between an open configuration for receiving a length of hair therebetween and a closed configuration in which hair is sandwiched between the opposing arms, and wherein at least one of the arms includes the heater.

29. A method of controlling a heater, the heater having a heating element (15) for receiving electrical power and for converting the electrical power into heat to heat a heating surface (6) of the heater; a temperature sensor (19) for sensing and outputting measurements of a temperature ($T_C$) of the heater; and a power actuator (22) for providing the electrical power to the heating element (15) of the heater; said method comprising:

> receiving temperature measurements ($T_C$) from the temperature sensor (19);
> controlling the power delivered to the heating element (15) by the power actuator (22) in dependence upon the temperature measurements ($T_C$) and at least one control parameter, to maintain the heater at a desired operating temperature ($T_d$);
> setting the at least one control parameter to a first value in an idle mode of operation, or to a second value in a boost mode of operation, wherein the second value is higher than the first value;
> switching from said idle mode of operation to said boost mode of operation upon detecting initiation of a load induced cooling effect of the heater; and
> switching from said boost mode of operation to said idle mode of operation upon detecting termination of a load induced cooling effect of the heater.

30. The method of Clause 29, wherein the at least one control parameter comprises one or more of the desired operating temperature ($T_d$) of the heater and at least one PID gain coefficient.

31. The method of Clause 29 or 30, wherein the heater further comprises a power sensor (27) for sensing and outputting measurements of the electrical power provided to the heating element (15) by the power actuator (22), the method further comprising receiving the power measurements (P) from the power sensor (27).

32. The method of Clause 31, further comprising switching from said idle mode of operation to said boost mode of operation upon detecting a change in the power measurements (P) indicative of initiation of a load induced cooling of the heater.

33. The method of Clause 31 or 32, further comprising switching from said boost mode of operation to said idle mode of operation upon detecting a change in the power measurements (P) indicative of termination of a load induced cooling effect of the heater.

34. The method of Clause 32 or 33, wherein said load induced cooling effect of the heater is detected by an increase in the power measurement (P).

35. The method of Clause 34, wherein the switching from said idle mode of operation to said boost mode of operation occurs upon detecting the power measurement (P) is greater than a first threshold power.

36. The method of Clause 34 or 35, wherein the switching from said idle mode of operation to said boost mode of operation occurs upon detecting the power measurement (P) is lower than a second threshold power.

37. The method of Clause 36, wherein the first threshold power is lower than the second threshold power.

38. The method according to any of Clauses 29 to 37, wherein detecting initiation of a load induced cooling effect of the heater comprises detecting a change in the temperature measurements ($T_C$) that are indicative of said load induced cooling effect of the heater.

39. The method of any of Clauses 29 to 38, wherein detecting termination of a load induced cooling effect of the heating surface (6) of the heater comprises detecting a change in the temperature measurements ($T_C$) that are indicative of termination of said load induced cooling effect of the heater.

40. The method of any of Clauses 29 to 39, wherein detecting initiation or termination of said load induced cooling effect of the heater is dependent on whether the temperature measurement ($T_C$) is within a defined range.

41. The method of any of Clauses 29 to 40, further comprising switching from said boost mode of operation to said idle mode of operation upon detecting a temperature measurement ($T_C$) greater than a maximum threshold temperature ($T_{max}$), wherein the maximum threshold temperature ($T_{max}$) is greater than an operating temperature of the boost mode of operation ($T_{boost}$).

42. The method of any of Clauses 29 to 41, further comprising remaining in said boost mode of operation upon detecting a temperature measurement ($T_C$) below a first threshold temperature ($T_{H2L}$).

43. The method of any of Clauses 29 to 42, comprising detecting termination of said load induced cooling effect of the heater upon detecting a temperature measurement ($T_C$) between a first threshold temperature ($T_{H2L}$) and a maximum threshold temperature ($T_{max}$).

44. The method of Clause 42 or 43, wherein the first threshold temperature ($T_{H2L}$) is lower than an operating temperature of the idle mode of operation ($T_{idle}$).

45. The method of any of Clauses 29 to 44, further comprising remaining in said idle mode of operation upon detecting a temperature measurement ($T_C$) greater than a second threshold temperature ($T_{L2H}$).

46. The method of any of Clauses 29 to 45, further comprising detecting the initiation of said load induced cooling effect of the heater upon detecting a temperature measurement ($T_C$) below a second threshold temperature ($T_{L2H}$).

47. The method of Clause 45 or 46, wherein the second threshold temperature ($T_{L2H}$) is lower than an operating temperature of the idle mode of operation ($T_{idle}$), preferably 1 to 6 degrees lower.

48. The method of any of Clauses 29 to 47, further comprising exiting the idle mode of operation and entering the boost mode of operation upon detecting a rate of change of temperature of the heater that is indicative of the initiation of the load induced cooling effect of the heater.

49. The method of Clause 48, wherein detecting a rate of change of temperature of the heater that is indicative of the initiation of the load induced cooling effect of the heater comprises detecting a rate of change of temperature greater than a threshold cooling rate.

50. The method of any of Clauses 29 to 49, further comprising exiting the boost mode and entering the idle mode upon detecting a rate of change of temperature of the heater that is below a threshold cooling rate, otherwise remaining in the boost mode.

51. The method of any of Clauses 29 to 50, wherein the at least one control parameter comprises a desired operating temperature ($T_d$) of the heater and wherein the first value and the second value are both above the glass transition temperature of hair.

52. The method of any of Clauses 29 to 51, wherein the desired operating temperature ($T_d$) of the heater is the desired operating temperature ($T_d$) of the heating surface (6) of the heater, the heating surface (6) of the heater preferably being configured to contact hair.

53. The method of any of Clauses 31 to 52, wherein the temperature measurements are measurements of the temperature of the heating element and further comprising using the power measurement (P) to determine a temperature difference between the heating element (15) and the heating surface (6) of the heater.

54. The method of Clause 53, further comprising determining the rate of change of temperature of the heating surface (6).

55. A hair styler comprising:

a heater having a heating element (15) for receiving electrical power and for converting the electrical power into heat to heat a heating surface (6) of the heater;
a temperature sensor (19) for sensing and outputting measurements of a temperature ($T_C$) of the heater;
a power actuator (22) for providing the electrical power to the heating element of the heater; and
control circuitry (24) for controlling the power actuator (22) to control the power delivered by the power actuator to the heating element, wherein the control circuitry (24) is configured to:

receive the temperature measurements ($T_C$) from the temperature sensor (19);
control the power delivered to the heating element by the power actuator (22) in dependence upon the temperature measurements ($T_C$) and at least one control parameter, to maintain the heating surface of the heater at a desired operating temperature ($T_d$);
wherein the control circuitry (24) includes an idle mode of operation in which the at least one control parameter is set to a first value and a boost mode of operation in which the at least one control parameter is set to a second value that is higher than the first value;

wherein the control circuitry (24) is configured to exit the idle mode of operation and enter the boost mode of operation in the case that the control circuitry (24) detects initiation of a load induced cooling effect of the heater; and
wherein the control circuitry (24) is configured to exit the boost mode of operation and enter the idle mode of operation when the control circuitry (24) detects a termination of the load induced cooling effect of the of the heater.

56. A microprocessor comprising instructions to run the method of any of Clauses 29 to 54.

57. A computer program product comprising computer implementable instructions for causing a programmable computer device to carry out the method of any of Clauses 29 to 54.

**Claims**

1. Heating apparatus for heating a load, the heating apparatus comprising:

   a heater having a heating element (15) for receiving electrical power and for converting the electrical power into heat to heat a heating surface (6) of the heater;
   a temperature sensor (19) for sensing and outputting measurements of a temperature ($T_C$) of the heater;
   a power actuator (22) for providing the electrical power to the heating element of the heater; and
   control circuitry (24) for controlling the power actuator (22) to control the power delivered by the power actuator to the heating element, wherein the control circuitry (24) is configured to:

   receive temperature measurements ($T_C$) from the temperature sensor (19);
   control the power delivered to the heating element (15) by the power actuator (22) in dependence upon the temperature measurements ($T_C$) and at least one control parameter, to maintain the heater at a desired operating temperature ($T_d$);

   wherein the control circuitry (24) includes an idle mode of operation in which at least one control parameter is set to a first value and a boost mode of operation in which the at least one control parameter is set to a second value that is higher than the first value;
   wherein the control circuitry (24) is configured to exit the idle mode of operation and enter the boost mode of operation in the case that the control circuitry (24) detects initiation of a load induced cooling effect of the heater;
   wherein the control circuitry is configured to exit the boost mode of operation and enter the idle mode of operation when the control circuitry (24) detects a termination of the load induced cooling effect of the heater, and
   wherein, in the boost mode, the second value of the at least one control parameter is variable in dependence on the amount of power that is being delivered to the heater or the rate of change of the received temperature measurements ($T_C$).

2. Heating apparatus according to claim 1, wherein the at least one control parameter comprises one or more of: the desired operating temperature ($T_d$) of the heater and at least one PID gain coefficient.

3. Heating apparatus according to claim 1 or 2, further comprising a power sensor (27) for sensing and outputting measurements of the electrical power provided to the heating element by the power actuator (22); wherein the control circuitry (24) is further configured to receive the power measurements (P) from the power sensor (27) and use the power measurements (P) to control the temperature of the heating surface (6) of the heater.

4. Heating apparatus according to claim 3, wherein the second value of the at least one control parameter is defined at a first level in dependence on the power measurements (P) being determined to be greater than a first power threshold (P1) but lower than a second power threshold (P2), and the second value of the at least one control parameter is defined at a second level in dependence on the power measurements (P) being determined to be higher than the second power threshold (P2).

5. Heating apparatus according to claim 4, wherein the desired operating temperature ($T_d$) of the heater is defined at a first temperature in dependence on the power measurements (P) being determined to be greater than a first power threshold (P1) but lower than a second power threshold (P2), and the desired operating temperature ($T_d$) of the heater is defined at a second temperature in dependence on the power measurements (P) being determined to be higher than the second power threshold (P2), wherein the second temperature is higher than the first temperature.

6. Heating apparatus according to any of claims 3 to 5, wherein the control circuitry (24) is configured to:

   exit the idle mode of operation and enter the boost mode of operation in the case that the control circuitry (24) detects a change of the power measurements (P) that are indicative of the initiation of said load induced cooling effect of the heater; and/or
   exit the boost mode of operation and enter the idle mode of operation when the control circuitry (24) detects a change of the power measurements (P) that are indicative of the termination of the load induced cooling effect of the heater.

7. Heating apparatus according to claim 6, wherein said load induced cooling effect of the heater is detected by an increase in the power measurements (P) from the power sensor (27).

8. Heating apparatus of claim 7, wherein the control circuitry (24) is configured to:

exit the idle mode of operation and enter the boost mode of operation in the case that the control circuitry (24) detects the power measurement (P) is greater than a low-to-high threshold power; and/or

exit the boost mode of operation and enter the idle mode of operation in the case that the control circuitry (24) detects the power measurement (P) is lower than a high-to-low threshold power, preferably wherein the low-to-high threshold power is lower than the high-to-low threshold power.

9. Heating apparatus according any preceding claim, wherein the control circuitry (24) is configured to:

exit the idle mode of operation and enter the boost mode of operation in the case that the control circuitry (24) detects a change of the temperature measurements ($T_C$) that is indicative of the initiation of said load induced cooling effect of the heater; and/or

exit the boost mode of operation and enter the idle mode of operation in the case that the control circuitry (24) detects a change of the temperature measurements ($T_C$) that is indicative of the termination of the load induced cooling effect of the heater.

10. Heating apparatus according to any preceding claim, wherein the control circuitry (24) is configured to detect the initiation or termination of said load induced cooling effect of the heater dependent on whether the temperature measurements ($T_C$) are within a defined range.

11. Heating apparatus according to any preceding claim, wherein, in the idle mode, the desired operating temperature ($T_d$) of the heater is determined in dependence on whether the styler is configured to be used on wet hair or dry hair, preferably wherein the desired operating temperature ($T_d$) of the heater is set at a lower temperature in the case that the styler is configured to be used on wet hair than when the styler is configured to be used on dry hair.

12. Heating apparatus according to any preceding claim, wherein, in the boost mode, the desired operating temperature ($T_d$) of the heater is determined in dependence on thermal characteristics of the heater.

13. A method of controlling a heater, the heater having a heating element (15) for receiving electrical power and for converting the electrical power into heat to heat a heating surface (6) of the heater; a temperature sensor (19) for sensing and outputting measurements of a temperature ($T_C$) of the heater; and a power actuator (22) for providing the electrical power to the heating element (15) of the heater; said method comprising:

receiving temperature measurements ($T_C$) from the temperature sensor (19);

controlling the power delivered to the heating element (15) by the power actuator (22) in dependence upon the temperature measurements ($T_C$) and at least one control parameter, to maintain the heater at a desired operating temperature ($T_d$);

setting the at least one control parameter to a first value in an idle mode of operation, or to a second value in a boost mode of operation, wherein the second value is higher than the first value and wherein the second value is variable in dependence on the amount of power that is being delivered to the heater or the rate of change of the received temperature measurements ($T_C$);

switching from said idle mode of operation to said boost mode of operation upon detecting initiation of a load induced cooling effect of the heater; and

switching from said boost mode of operation to said idle mode of operation upon detecting termination of a load induced cooling effect of the heater.

14. A hair styler comprising:

a heater having a heating element (15) for receiving electrical power and for converting the electrical power into heat to heat a heating surface (6) of the heater;

a temperature sensor (19) for sensing and outputting measurements of a temperature ($T_C$) of the heater;

a power actuator (22) for providing the electrical power to the heating element of the heater; and

control circuitry (24) for controlling the power actuator (22) to control the power delivered by the power actuator to the heating element, wherein the control circuitry (24) is configured to:

receive the temperature measurements ($T_C$) from the temperature sensor (19);

control the power delivered to the heating element by the power actuator (22) in dependence upon the temperature measurements ($T_C$) and at least one control parameter, to maintain the heating surface of the heater at a desired operating temperature ($T_d$);

wherein the control circuitry (24) includes an idle mode of operation in which the at least one control parameter is set to a first value and a boost mode of operation in which the at least one control parameter is set to a second value that is higher than the first value;

wherein the control circuitry (24) is configured to exit the idle mode of operation and enter the boost mode of operation in the case that the control circuitry (24) detects initiation of a load induced cooling effect of the heater; and

wherein the control circuitry (24) is configured to exit the boost mode of operation and enter the idle mode of operation when the control circuitry (24) detects termination of the load induced cooling effect of the of the heater; and

wherein, in the boost mode, the second value of the at least one control parameter is variable in dependence on the amount of power that is being delivered to the heater or the rate of change of the received temperature measurements ($T_C$).

15. A computer program product comprising computer implementable instructions for causing a programmable computer device to carry out the method of claim 13.

**Figure 1a**

**Figure 1b**

EP 4 657 978 A2

EP 4 657 978 A2

**Figure 2**

**Figure 3**

**Figure 4**

**Figure 5**

**Figure 6**

Figure 7

**Figure 8**

**Figure 9**

110 — **Heat to T$_{idle}$**

112 — **Set controller to to T$_{idle}$ /PID$_1$**

113 — **Measure T, $\frac{dT}{dt}$**

$\frac{dT}{dt} \leq \left(\frac{dT}{dt}\right)_{conv}$

$T > T_{L2H}$

$T < T_{L2H}$

$\frac{dT}{dt} > \left(\frac{dT}{dt}\right)_{conv}$

114 — **Measure power , P**

$P < P_{L2H}$

$P > P_{L2H}$

116 — **Set controller to T$_{boost}$ /PID$_2$**

117 — **Measure T**

$T > T_{MAX}$

$T_{H2L} < T < T_{MAX}$

118 — **Measure power, P**

$P > P_{H2L}$

$P < P_{H2L}$

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019122839 A